# EUROPÄISCHE PATENTANMELDUNG

(11) **EP 3 450 399 A1**
(43) Veröffentlichungstag der Anmeldung: **06.03.2019**
(21) Anmeldenummer: 18187487.6
(22) Anmeldetag: 06.08.2018
(51) Int. Cl.: C02F 1/28, B64D 11/00, C02F 1/42, C02F 5/02

(54) **FLUGZEUG**

(30) Priorität: 31.08.2017 DE 102017119961
(71) Anmelder: Airbus Operations GmbH, 21129 Hamburg (DE)
(72) Erfinder: Reiss, Matthias, 21129 Hamburg (DE); Flashaar, Sebastian, 21129 Hamburg (DE); Wiese, Thomas, 29227 Celle (DE); Alps, Volker, 29227 Celle (DE)
(74) Vertreter: Bird & Bird LLP

(57) **Zusammenfassung**

Die Erfindung betrifft ein Flugzeug, aufweisend: einen Flugzeugrumpf (12), einen im Flugzeugrumpf (12) ausgebildeten Kabinenbereich (14) und Unterflurbereich (16), der von dem Kabinenbereich (14) durch eine Bodentrennwand (18) getrennt ist, und ein Frischwasserversorgungssystem (20), wobei das Frischwasserversorgungssystem (20) eine Frischwasserbereitstellungseinheit (22) aufweist, die im Unterflurbereich (16) angeordnet ist. Das Frischwasserversorgungssystem (20) weist mehrere im Kabinenbereich (14) angeordnete Wasserentnahmeeinheiten (24) und ein sich von der Frischwasserbereitstellungseinheit (22) verzweigt zu den Wasserentnahmeeinheiten (24) erstreckendes Wasserleitungsnetz (26) auf. Jede Wasserentnahmeeinheit (24) weist ein Absperrventil (28), eine Filtereinheit (30) und eine Zapfstelle (32) aufweist, die mittels Wasserleitungen (34) in Serie gekoppelt sind. Jede Filtereinheit (30) weist einen austauschbaren Wasserfilter mit einem ersten Filtermaterial und einem zweiten Filtermaterial auf, wobei das erste Filtermaterial zum Filtern von Partikeln aus dem wasserfilterdurchströmenden Wasser ausgebildet ist, und wobei das zweite Filtermaterial zum Enthärten des wasserfilterdurchströmenden Wassers ausgebildet ist.

## Beschreibung

Die Erfindung betrifft ein Flugzeug, das einen Flugzeugrumpf, einen im Flugzeugrumpf ausgebildeten Kabinenbereich, einen im Flugzeugrumpf ausgebildeten Unterflurbereich, der von dem Kabinenbereich durch eine im Flugzeugrumpf angeordnete Bodentrennwand getrennt ist, und ein Frischwasserversorgungssystem aufweist.

Der Innenraum des Flugzeugrumpfs eines Flugzeugs kann durch die Bodentrennwand in den Kabinenbereich und in den Unterflurbereich unterteilt sein. Der Unterflurbereich ist also unterhalb des Kabinenbereichs angeordnet. Ein Frachtbereich des Flugzeugs kann von dem Unterflurbereich gebildet sein oder zumindest in diesem angeordnet sein. Im Kabinenbereich des Flugzeugs sind oftmals mindestens eine Board-Küche und mindestens eine Board-Toilette angeordnet. Außerdem sind im Kabinenbereich die Sitzplätze für Passagiere angeordnet. Die Board-Küche kann mindestens ein wasserführendes Gerät aufweisen, wie beispielsweise einen Wassererhitzer, eine Kaffeemaschine und/oder eine Spülmaschine. Auch die Board-Toilette kann ein wasserführendes Gerät aufweisen, wie beispielsweise eine Toilette als solches und/oder einen Wassererhitzer.

Ein wasserführendes Gerät der Board-Küche und/oder der Board-Toilette kann mittels des Frischwasserversorgungssystems des Flugzeugs mit Frischwasser versorgt werden. Die Versorgung von wasserführenden Geräten einer Board-Küche und/oder einer Board-Toilette eines Flugzeugs mittels eines Frischwasserversorgungssystems des Flugzeugs ist bekannt. Dabei weist das Frischwasserversorgungssystem eine Frischwasserbereitstellungseinheit auf. Die Frischwasserbereitstellungseinheit kann beispielsweise einen Frischwassertank und eine Wasserpumpe aufweisen, die derart miteinander gekoppelt sind, dass von der Frischwasserbereitstellungseinheit Frischwasser aus dem Frischwassertank mittels der Pumpe unter Druck gesetzt und bereitgestellt wird. Das Frischwasserversorgungssystem kann außerdem ein Wasserleitungsnetz aufweisen, so dass Wasser von der Frischwasserbereitstellungseinheit durch das Wasserleitungsnetz gepumpt werden kann. Das Frischwasserversorgungssystem weist außerdem mehrere Wasserentnahmeeinheiten auf. Das Wasserleitungsnetz erstreckt sich von der Frischwasserbereitstellungseinheit zu den Wasserentnahmeeinheiten, so dass das unter Druck stehende Wasser von der Frischwasserbereitstellungseinheit zu jeder der Wasserentnahmeeinheiten strömen kann. Jeder der Wasserentnahmeeinheiten weist eine Zapfstelle auf. Eine Zapfstelle kann beispielsweise ein Anschluss und/oder eine Schnittstelle für bzw. zu einem beliebigen wasserführenden Gerät darstellen. So kann eine Zapfstelle beispielsweise ein Wasseranschluss sein. Das Frischwasserversorgungssystem dient also zum Bereitstellen und Zuführen von Wasser zu wasserführenden Geräten innerhalb des Kabinenbereichs des Flugzeugs.

Um das von der Frischwasserbereitstellungseinheit bereitgestellte Wasser mit der gewünschten Wasserqualität mittels des Wasserleitungsnetzes zu den Wasserentnahmeeinheiten strömen zu lassen, kann es vorgesehen sein, ein Wasserfilter in Strömungsrichtung unmittelbar hinter der Frischwasserbereitstellungseinheit in das Wasserleitungsnetz integriert ist. Das sich im Anschluss verzweigende Wasserleitungsnetz zu den Wasserentnahmeeinheiten führt sodann das von dem Wasserfilter gefilterte Frischwasser.

In der Praxis wurde festgestellt, dass der zuvor erläuterte Wasserfilter recht häufig zu wechseln ist, um die gewünschte Wasserqualität des gefilterten Wassers zu gewährleisten. Die Frischwasserbereitstellungseinheit ist vorzugsweise im Unterflurbereich angeordnet, um den Kabinenbereich möglichst effektive für Passagiere zu nutzen. Da der Wasserfilter in dem zuvor erläuterten Bespiel unmittelbar hinter der Frischwasserbereitstellungseinheit im Wasserleitungsnetz integriert ist, müssen die Personen, die den Wasserfilter tauschen, auch Zugang zu dem Unterflurbereich des Flugzeugs bekommen. An die Zugangsberechtigung zum Unterflurbereich sind jedoch Zugangsberechtigungen geknüpft. So kann eine Person, die Reinigungsarbeiten in der Board-Küche und/oder in der Board-Toilette ausführt für gewöhnlich nicht in den Unterflurbereich eintreten. Bei dem Wechsel des Wasserfilters entsteht deshalb ein erhöhter Personalaufwand.

Der Erfindung liegt die Aufgabe zu Grunde, ein Flugzeug mit einem Frischwasserversorgungssystem vorzuschlagen, das sowohl die Bereitstellung von Wasser für mehrere Wasserentnahmeeinheiten mit der jeweils gewünschten Wasserqualität erlaubt als auch möglichst geringe Wartungskosten hervorruft.

Gemäß einem ersten Aspekt der Erfindung wird die zuvor genannte Aufgabe gelöst durch ein Flugzeug mit den Merkmalen des Anspruchs 1.

Es wird ein Flugzeug vorgeschlagen, das einen Flugzeugrumpf, einen im Flugzeugrumpf ausgebildeten Kabinenbereich, einen im Flugzeugrumpf ausgebildeten Unterflurbereich, der von dem Kabinenbereich durch eine im Flugzeugrumpf angeordnete Bodentrennwand getrennt ist, und ein Frischwasserversorgungssystem aufweist. Das Frischwasserversorgungssystem weist eine Frischwasserbereitstellungseinheit auf, die im Unterflurbereich angeordnet ist. Außerdem weist das Frischwasserversorgungssystem mehrere Wasserentnahmeeinheiten auf, die jeweils im Kabinenbereich angeordnet sind. Darüber hinaus weist das Frischwasserversorgungssystem ein sich von der Frischwasserbereitstellungseinheit verzweigtes zu den Wasserentnahmeeinheiten erstreckendes Wasserleitungsnetz auf. Das Wasserleitungsnetz ist derart ausgebildet, so dass Wasser von der Frischwasserbereitstellungseinheit zu jeder der Wasserentnahmeeinheiten entströmen kann. Jede Wasserentnahmeeinheit weist ein Absperrventil, eine Filtereinheit und eine Zapfstelle auf. Das Absperrventil, die Filtereinheit und die Zapfstelle einer jeweils zugehörigen Wasserentnahmeeinheit sind mittels Wasserleitungen der jeweiligen Wasserentnahmeeinheit in Serie gekoppelt, so dass Wasser von dem Absperrventil der jeweiligen Wasserentnahmeeinheit durch die Filtereinheit der jeweiligen Wasserentnahmeeinheit zu der Zapfstelle der jeweiligen Wasserentnahmeeinheit strömen kann. Jede Filtereinheit weist einen austauschbaren Wasserfilter mit einem ersten Filtermaterial und einem zweiten Filtermaterial auf. Das erste Filtermaterial ist zum Filtern von Partikeln aus dem Wasserfilter durchströmenden Wasser ausgebildet. Das zweite Filtermaterial ist zum Enthärten des den Wasserfilter durchströmenden Wassers ausgebildet.

Unter dem Begriff Enthärten kann insbesondere eine Härtestabilisierung verstanden werden. So kann das zweite Filtermaterial zur Härtestabilisierung des den Wasserfilter durchströmenden Wassers ausgebildet sein.

Die Wasserentnahmeeinheiten des Frischwasserversorgungssystems sind im Kabinenbereich angeordnet. Außerdem ist es bevorzugt vorgesehen, dass die Wasserfiltereinheit einer jeweiligen Wasserentnahmeeinheit zwischen dem Absperrventil der jeweiligen Wasserentnahmeeinheit und der Zapfstelle der jeweiligen Wasserentnahmeeinheit angeordnet ist. Um den Wasserfilter der Wasserfiltereinheit zu tauschen, kann deshalb zunächst das Absperrventil der jeweiligen Wasserentnahmeeinheit den Wasserzufluss zu der Wasserfiltereinheit sperren, so dass beim Austausch des Wasserfilters kein oder nur ein sehr geringer Wasseraustritt stattfindet. Der Austausch des Wasserfilters einer Wasserfiltereinheit kann außerdem innerhalb des Kabinenbereichs erfolgen. Denn jede Wasserentnahmeeinheit ist im Kabinenbereich angeordnet. Der Austausch der Wasserfilter kann also von den gleichen Personen vorgenommen werden, die für die Reinigung des Kabinenbereichs, insbesondere der Board-Küche und/oder der Board-Toilette zuständig sind, erfolgen. Indem die Wasserfilter der Wasserfiltereinheiten im Kabinenbereich angeordnet sind, ist deshalb ein besonders einfacher, schneller und kostengünstiger Austausch der Wasserfilter ermöglicht.

Außerdem kann es vorgesehen sein, dass das Frischwasserversorgungssystem mindestens eine Zapfstelle aufweist, für die keine vorherige Wasserfilterung notwendig ist. Ein unmittelbar in Strömungsrichtung hinter der Wasserbereitstellungseinheit in das Wasserleitungsnetz integrierter Wasserfilter kann auf die zuvor genannte, niedrigere Anforderung an die Wasserqualität nicht eingehen, denn mit einem zentralen Wasserfilter wird das gesamte Wasser gefiltert.

Indem der Wasserentnahmeeinheiten jeweils eine Filtereinheit mit einem zugehörigen Wasserfilter zugeordnet ist, kann bedarfsgerecht auf die jeweils gewünschte Wasserqualität eingegangen werden. Die entsprechenden Wasserfilter werden auch als dezentrale Wasserfilter bezeichnet. Jeder Wasserfilter kann in der zugehörigen Größe und/oder Filterleistungsfähigkeit an den jeweiligen Zweck der Wasserentnahmeeinheit angepasst sein. Der austauschbare Wasserfilter einer Wasserfiltereinheit einer Wasserentnahmeeinheit ermöglicht darüber hinaus einen bedarfsorientierten Austausch des entsprechenden Wasserfilters. So kann der Wasserfilter einer Wasserentnahmeeinheit in kürzeren Austauschintervallen getauscht werden, sofern die Wasserentnahmeeinheit beispielsweise der Board-Küche, insbesondere einem Wasserkocher und/oder einer Kaffeemaschine, zur Bereitstellung von Wasser dient.

Indem mehrere Filtermaterialien mit unterschiedlichen Filterfunktionen in dem gleichen Wasserfilter integriert sind, trägt der entsprechende, austauschbare Wasserfilter außerdem zu einem einfachen, schnellen und günstigen Austausch bei.

Darüber hinaus wurde in der Praxis festgestellt, dass die Funktionsfähigkeit des zweiten Filtermaterials oftmals von der Funktionsfähigkeit des ersten Filtermaterials abhängt. So kann die Enthärtung, insbesondere die Härtestabilisierung, beispielsweise nur ausreichend gut funktionieren, wenn zuvor eine beispielsweise ausreichende Menge an Partikeln aus dem Wasser gefiltert worden sind. In diesem Beispiel bieten die beiden Filtermaterialien des gemeinsamen Wasserfilters den Vorteil, dass beide Filterfunktionen durch den regelmäßigen, gleichzeitigen Austausch des Wasserfilters immer sicher gestellt sind. Hingegen könnte bei separaten Filtern, die jeweils nur eine der Filterfunktionen erfüllen, ein Fehler auftreten, dass beispielsweise nur einer der beiden Filter gewechselt wird. Dies kann sodann zu einer Beeinträchtigung der Entkalkung und/oder des Kalkschutzes des Wassers führen. Bei den Filtern mit beiden Filtermaterialen tritt ein derartiger Fehler nicht auf. Die an das gefilterte Wasser gestellten Qualitätsanforderungen können deshalb besonders sicher gewährleistet werden. Die Qualitätsanforderungen betreffen vorzugsweise einerseits den Härtegrad des gefilterten Wassers und andererseits die (insbesondere relative) Partikelzahl des gefilterten Wassers, insbesondere hinsichtlich Partikel mit einer vorbestimmten Partikelgröße und/oder mit vorbestimmten Stoffeigenschaften.

Eine vorteilhafte Ausgestaltung des Flugzeugs zeichnet sich dadurch aus, dass das erste Filtermaterial Aktivkohlefiltermaterial ist. Zumindest kann es vorgesehen sein, dass das erste Filtermaterial beispielsweise zu mindestens 80 Volumenprozent und/oder zu mindestens 80 Massenprozent aus Aktivkohlefiltermaterial besteht. Aktivkohlefiltermaterial kann dazu ausgebildet sein, um Partikel mit bestimmten Stoffeigenschaften und/oder bestimmten Partikelgrößen aus Wasser zu filtern, das durch das Aktivkohlefiltermaterial strömt. Mittels des Aktivkohlefiltermaterials kann deshalb eine Entkeimung und/oder Reduzierung der Keimanzahl von Wasser gewährleistet werden, das das Aktivkohlefiltermaterial durchströmt.

Eine vorteilhafte Ausgestaltung des Flugzeugs zeichnet sich dadurch aus, dass das zweite Filtermaterial als ein Katalysatormaterial ausgebildet ist. Es kann auch vorgesehen sein, dass das zweite Filtermaterial zumindest ein Katalysatormaterial aufweist. Mittels des Katalysatormaterials ist es möglich, dass das Enthärten, insbesondere die Härtestabilisierung, des durchströmenden Wassers mittels Katalyse erfolgt. Das Katalysatormaterial ist vorzugsweise als ein Harzmaterial ausgebildet und/oder in ein Harzmaterial gebunden oder eingemischt. In einer vorteilhaften Ausgestaltung erwirkt das Katalysatormaterial und/oder das Harzmaterial mit dem Katalysatormaterial durch einen Katalyseprozess, dass die überschüssigen Calcium- und/oder Carbonat-Ionen im Wasser in, insbesondere kleinste, Kalkkristalle umgewandelt werden. Dadurch könnten wichtige Mineralien im Wasser enthalten bleiben. Außerdem kann die Bildung von Kalkstein unterbunden werden, da die Kristalle ihre Fähigkeit verloren haben, sich dauerhaft, insbesondere im wasserführenden System, abzulagern. Als ein Effekt kann auf weitere Zusatzstoffe, wie z. B. Chemikalien oder Salze, für das Wasser verzichtet werden. Alternativ und/oder ergänzend kann das zweite Filtermaterial derart ausgebildet sein, dass es Calcium- und/oder Carbonat-Ionen aus dem Wasser mittels Katalysator-Technologie und/oder zugehörigem Katalysatormaterial zu Kalkkristallen zusammenfügt. Hierdurch wird die effektive Wasserhärte und/oder das Ausfallen von Härte verringert.

Eine weitere vorteilhafte Ausgestaltung des Flugzeugs zeichnet sich dadurch aus, dass das erste Filtermaterial granulatartig ausgebildet ist und/oder dass das zweite Filtermaterial granulatartig ausgebildet ist. Durch die granulatartige Ausgestaltung des ersten bzw. zweiten Filtermaterials kann die jeweils zugehörige Filterfunktion in ihrer jeweiligen Leistungsfähigkeit besonders gut und einfach angepasst sein. Um die Filterleistung zu erhöhen, kann beispielsweise mehr granulatartiges Filtermaterial von dem ersten bzw. zweiten Filtermaterial für den Wasserfilter vorgesehen sein. Die Leistungsfähigkeit des Wasserfilters hinsichtlich der Filterfunktion des ersten Filtermaterials bzw. der Enthärtungsfunktion (ebenfalls als Filterfunktion bezeichnet) des zweiten Filtermaterials ist deshalb besonders einfach skalierbar, sofern das erste bzw. zweite Filtermaterial granulatartig ist. Die Enthärtungsfunktion kann sich insbesondere die Härtestabilisierung beziehen.

Eine weitere vorteilhafte Ausgestaltung des Flugzeugs zeichnet sich dadurch aus, dass das erste Filtermaterial formstabil und/oder offenporig ausgebildet ist. Eine weitere vorteilhafte Ausgestaltung des Flugzeugs zeichnet sich dadurch aus, dass das zweite Filtermaterial formstabil und/oder offenporig ausgebildet ist. Beide Filtermaterialien können oder eines der beiden Filtermaterialen kann also formstabil ausgebildet sein. Das erste und/oder zweite Filtermaterial kann deshalb zur Formstabilität des austauschbaren Wasserfilters beitragen. Dies reduziert das Eigengewicht des austauschbaren Wasserfilters. Indem das erste und/oder zweite Filtermaterial offenporig ausgestaltet ist, kann das jeweilige Filtermaterial eine besonders große Oberfläche zu dem den Wasserfilter durchströmenden Wasser bilden. Als ein Effekt kann der austauschbare Wasserfilter besonders klein bzw. besonders kompakt ausgebildet sein.

Eine weitere vorteilhafte Ausgestaltung des Flugzeugs zeichnet sich dadurch aus, dass der im Unterflurbereich angeordnete Teil des Frischwasserversorgungssystems, insbesondere des zugehörigen Wasserleitungsnetzes, frei von Filtern zur Wasserfilterung ist. Indem also keine Filter zur Wasserfilterung des Frischwasserversorgungssystems oder des Wasserleitungsnetzes im Unterflurbereich angeordnet sind, kann gewährleistet werden, dass die Wasserfilterung des Frischwasserversorgungssystems ausschließlich im Kabinenbereich erfolgt. Damit können die austauschbaren Wasserfilter des Frischwasserversorgungssystems auch von dem Personal gewechselt werden, das für die Reinigung der Board-Küche und/oder der Board-Toilette zuständig ist. Für den Austausch des austauschbaren Wasserfilters ist deshalb kein Zutrittsrecht zu dem Unterflurbereich notwendig. Der Wechsel bzw. Austausch der Wasserfilter ist deshalb besonders einfach und schnell möglich, was einen entsprechenden Kostenvorteil bietet.

Eine weitere vorteilhafte Ausgestaltung des Flugzeugs zeichnet sich dadurch aus, dass der Wasserfilter einer jeden Filtereinheit als austauschbare Wasserfilterkartusche ausgebildet ist. Die Wasserfilterkartusche ist lösbar von einer Filterkartuschenhalterung der jeweiligen Filtereinheit gehalten. Bevorzug ist es vorgesehen, dass von einem Absperrventil zu der Zapfstelle der zugehörigen Wasserentnahmeeinheit strömendes Wasser zuvor vollständig den von der zugehörigen Filtereinheit gehaltenen Wasserfilter durchströmt. Ein Bypass und/oder ein Nebenstrom zu dem Wasserstrom durch die Filtereinheit bzw. zu dem Wasserfilter der jeweiligen Wasserentnahmeeinheit ist nicht vorgesehen. Eine Wasserfilterkartusche ermöglicht einen besonders einfachen und schnellen Austausch. Dies reduziert eine mögliche Standzeit des Flugzeugs für den Austausch der Wasserfilterkartusche und damit auch die zugehörigen Kosten. Darüber hinaus kann eine Wasserfilterkartusche besonders sicher ausgetauscht werden, da diese als eine handhabbare Einheit ausgebildet sein kann. Insbesondere kann bzw. können die äußere Form der Filterkartusche und/oder die Filterkartuschenhalterung derart ausgebildet sein, dass ein fehlerhaftes Einsetzen der Wasserfilterkartusche in die Filterkartuschenhalterung verhindert ist. Die Filterkartuschenhalterung kann ausgebildet sein, um die Wasserfilterkartusche in nur einer vorbestimmten Stellung zu halten. Dies kann gewährleisten, dass die Reihenfolge für das die Wasserfilterkartusche durchströmende Wasser hinsichtlich des ersten Filtermaterials und des zweiten Filtermaterials sichergestellt ist.

Eine weitere vorteilhafte Ausgestaltung des Flugzeugs zeichnet sich dadurch aus, dass jede Wasserfilterkartusche als eine in die jeweilige Filterkartuschenhalterung einsteckbare bzw. aussteckbare Wasserfilterkartusche ausgebildet ist. Jede der Filterkartuschenhalterungen kann zum Einstecken bzw. Ausstecken einer Wasserfilterkartusche ausgebildet sein. Mit anderen Worten kann jede Filterkartuschenhalterung dazu ausgebildet sein, um in diese eine Wasserfilterkartusche einzustecken bzw. eine Wasserfilterkartusche aus dieser auszustecken. Ein Ausstecken kann beispielsweise ein Herausziehen und/oder Herauslösen sein. Die einsteckbare bzw. aussteckbare Wasserfilterkartusche kann auch als Steckkartusche bezeichnet sein. Sie erleichtert den Austausch der Wasserfilterkartusche. Denn der Austausch der entsprechenden Wasserfilterkartusche kann vorzugsweise ohne Werkzeug erfolgen. Dabei kann es vorgesehen sein, dass jede Filterkartuschenhalterung zum werkzeuglosen Einstecken bzw. Ausstecken einer Wasserfilterkartusche ausgebildet ist. Entsprechendes kann für jede der einsteckbaren bzw. aussteckbaren Wasserfilterkartuschen vorgesehen sein. Das werkzeuglose Austauschen eines als Wasserfilterkartusche ausgebildeten Wasserfilters durch einfaches Ausstecken einer "alten" Wasserfilterkartusche und einem anschließenden Einstecken einer "neuen" Wasserfilterkartusche ist besonders einfach, schnell und günstig möglich.

Eine weitere vorteilhafte Ausgestaltung des Flugzeugs zeichnet sich dadurch aus, dass die mehreren Wasserfilter gleich ausgebildet sind. Die gleiche Ausbildung der Wasserfilter kann sich auf den Aufbau, auf die konstruktive Ausgestaltung und/oder auf das jeweilige Außenmaß beziehen. So können die Wasserfilter im Aufbau, in der konstruktiven Ausgestaltung und/oder in ihren äußeren Maßen gleich sein. Mit anderen Worten können die mehreren Wasserfilter einheitlich ausgebildet sein. Somit können einheitliche Wasserfilter für die mehreren Filtereinheiten vorgesehen sein. Mit einheitlichen Wasserfiltern können erhebliche Kosten bei dem Austausch der Wasserfilter eingespart werden. Denn einheitliche Wasserfilter können besonders kostengünstig hergestellt und gelagert werden. Zudem können Fehler beim Wechseln der Wasserfilter verhindert oder zumindest reduziert werden. Denn die Verwendung eines falschen Wasserfilters ist fast ausgeschlossen.

Eine vorteilhafte Ausgestaltung des Flugzeugs zeichnet sich dadurch aus, dass die Wasserentnahmeeinheit jeweils einem Küchenmonument im Kabinenbereich oder jeweils einem Toilettenmonument im Kabinenbereich zugeordnet ist. So kann beispielsweise eine Wasserentnahmeeinheit des Frischwasserversorgungssystems einem Kabinenmonument im Kabinenbereich des Flugzeugs zugeordnet sein. Eine weitere Wasserentnahmeeinheit des Frischwasserversorgungssystems kann einem Toilettenmonument im Kabinenbereich des Flugzeugs zugeordnet sein. Wird das Küchenmonument vom Reinigungspersonal gereinigt, so kann das Reinigungspersonal dabei auch den Wasserfilter der Filtereinheit der Wasserentnahmeeinheit austauschen, die dem Küchenmonument zugeordnet ist. Ein derartiger Austausch kann deshalb besonders einfach und effizient erfolgen. Dies reduziert deshalb auch die Kosten für den Austausch des Wasserfilters. Entsprechendes kann für den Wasserfilter der Wasserfiltereinheit der Wasserentnahmeeinheit gelten, die dem Toilettenmonument zugeordnet ist.

Eine weitere vorteilhafte Ausgestaltung des Flugzeugs zeichnet sich dadurch aus, dass jeder Wasserfilter ein Gehäuse, einen von dem Gehäuse gebildeten Innenraum, einen ersten Anschluss zum Zuführen von Wasser in den Innenraum, und einen zweiten Anschluss zum Abführen von Wasser aus dem Innenraum aufweist, wobei der Innenraum derart mit dem ersten und zweiten Filtermaterial gefüllt ist, so dass Wasser unter unmittelbarem Kontakt mit den Filtermaterialien vom ersten Anschluss zum zweiten Anschluss strömen kann. Mit einer derartigen Ausgestaltung kann jeder Wasserfilter als Wasserfilterkartusche ausgebildet sein, wobei das Gehäuse das jeweils zugehörige Kartuschengehäuse bilden kann. Vorzugsweise ist das Gehäuse bis auf den ersten und zweiten Anschluss fluiddicht, insbesondere wasserdicht. Wasserfilter mit dem zuvor erläuterten Aufbau sind besonders einfach handhabbar.

Eine weitere vorteilhafte Ausgestaltung des Flugzeugs zeichnet sich dadurch aus, dass der Innenraum jedes Gehäuses von einer siebartigen Trennwand in eine erste Filterkammer und eine zweite Filterkammer unterteilt ist, wobei das erste Filtermaterial ausschließlich in der ersten Filterkammer und das zweite Filtermaterial ausschließlich in der zweiten Filterkammer angeordnet ist. Außerdem kann die siebartige Trennwand derart ausgebildet sein, dass ein durchmischen der Filtermaterialien verhindert wird. So kann die siebartige Trennwand vorzugsweise derart ausgebildet sein, dass sie für das erste Filtermaterial und/oder das zweite Filtermaterial undurchlässig ist. Mittels der siebartigen Trennwand können also die Filterfunktion des ersten Filtermaterials und die Enthärtungsfunktion, insbesondere Härtestabilisierung, des zweiten Filtermaterials räumlich voneinander getrennt sein. Außerdem ist es durch die Trennung möglich, dass zunächst Partikel aus dem Wasser mittels des ersten Filtermaterials herausgefiltert werden, um im Anschluss eine ausreichende Enthärtungsgüte, insbesondere eine ausreichende Härtestabilisierungsgüte, des Wassers mittels des zweiten Filtermaterials zu erreichen. Dies ist insbesondere dann von Vorteil, wenn die Enthärtungsfunktion des zweiten Filtermaterials von der Filterfunktion des ersten Filtermaterials abhängt.

Eine weitere vorteilhafte Ausgestaltung des Flugzeugs zeichnet sich dadurch aus, dass die Trennwand jedes Wasserfilters derart ausgebildet und/oder angeordnet ist, dass die zweite Filterkammer hinter der ersten Filterkammer in einer Strömungsrichtung für Wasser von dem ersten Anschluss zum zweiten Anschluss angeordnet ist. Dies gewährleistet, dass durch den ersten Anschluss zugeführtes Wasser zunächst das erste Filtermaterial in der ersten Filterkammer durchströmt und/oder umströmt, danach durch die siebartige Trennwand strömt und daraufhin durch und/oder um das zweite Filtermaterial in der zweiten Filterkammer strömt, um abschließend durch den zweiten Anschluss aus dem Innenraum des Wasserfilters abgeführt zu werden. Auf die zuvor erläuterten Effekte und/oder Vorteile wird in analoger Weise Bezug genommen.

Eine weitere vorteilhafte Ausgestaltung des Flugzeugs zeichnet sich dadurch aus, dass das Gehäuse jedes Wasserfilters eine zylindrische Form aufweist, wobei der erste Anschluss des jeweiligen Wasserfilters an einer ersten Stirnseite des Gehäuses angeordnet ist, der zweite Anschluss des jeweiligen Wasserfilters an einer zweiten Stirnseite des Gehäuses angeordnet ist, und die Trennwand des jeweiligen Wasserfilters derart zwischen den Stirnseiten des Gehäuses angeordnet ist, dass die Filterkammern des jeweiligen Wasserfilters in einer Längsachsialrichtung des Gehäuses hintereinander von der Trennwand getrennt angeordnet sind. Ein Beispiel für eine siebartige Trennwand für einen derartigen Wasserfilter kann beispielsweise eine runde, insbesondere kreisrunde, scheibenförmige Trennwand sein, die sich in Radialrichtung innerhalb des Gehäuses des jeweiligen Wasserfilters erstreckt. Grundsätzlich ist es jedoch auch denkbar, dass sich die Trennwand schräg zur Längsachsialrichtung des jeweiligen Gehäuses erstreckt. Andere Ausgestaltungen der Trennwand sind ebenfalls denkbar. Die Trennwand eines Wasserfilters gemäß der zuvor genannten Ausgestaltung bietet den Vorteil, dass die Filterkammern in Längsachsialrichtung des jeweiligen Gehäuses hintereinander angeordnet sind. Vorzugsweise ist die zweite Filterkammer in einer Strömungsrichtung für Wasser von dem ersten Anschluss zum zweiten Anschluss hinter der ersten Filterkammer angeordnet. Die Längsachsialrichtung kann mit der Strömungsrichtung des Wassers übereinstimmen. Somit durchströmt das Wasser zunächst die erste Filterkammer und sodann die zweite Filterkammer. Die Anordnung der Anschlüsse an den Stirnseiten des Gehäuses ist besonders einfach möglich. Damit sind derartige Wasserfilter besonders günstig und einfach herstellbar.

Eine weitere Vorteilhafte Ausgestaltung des Flugzeugs zeichnet sich dadurch aus, dass das Gehäuse jedes Wasserfilters eine hohlzylindrische Form aufweist und die Trennwand des jeweiligen Wasserfilters als ringförmige, siebartige Trennwand derart im Innenraum des Gehäuses des jeweiligen Wasserfilters angeordnet ist, dass die erste Filterkammer des jeweiligen Wasserfilters radial außenseitig und getrennt mittels der Trennwand zu der zweiten Filterkammer des jeweiligen Wasserfilters angeordnet ist. Wasser kann bei einer derartigen Ausgestaltung also zunächst in die radial außenseitige Filterkammer des jeweiligen Wasserfilters einströmen und sodann in Radialrichtung durch die ringförmige und siebartige Trennwand in die zweite Filterkammer einströmen, um sodann schließlich durch den zweiten Anschluss abgeführt zu werden. Vorzugsweise ermöglicht die ringförmige Trennwand, dass Wasser über die gesamte ringförmige Trennwand von der ersten Filterkammer zu der zweiten Filterkammer strömen kann. Wasser strömt also ringsum in Radialrichtung durch die ringförmige Trennwand von der ersten Kammer in die zweite Kammer. Die ringförmige und siebartige Trennwand bietet deshalb einen besonders geringen Strömungswiderstand für das durchtretende Wasser. Ein derartiger Wasserfilter weist also insgesamt einen besonders geringen Strömungswiderstand auf. Folglich muss weniger Energie aufgewendet werden, um gefiltertes Wasser mit einer ausreichenden Förderleistung bereitzustellen.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
- Fig. 1: zeigt eine Ausgestaltung eines Flugzeugs in einer schematischen Perspektivansicht.
- Fig. 2: zeigt einen Teil einer beispielhaften Ausgestaltung eines Innenraums eines Flugzeugrumpfs in einer schematischen Schnittansicht.
- Fig. 3: zeigt eine beispielhafte Ausgestaltung einer Wasserentnahmeeinheit in einer schematischen Darstellung.
- Fig. 4: zeigt eine erste beispielhafte Ausgestaltung des Wasserfilters in einer schematischen Perspektivdarstellung.
- Fig. 5: zeigt eine zweite beispielhafte Ausgestaltung des Wasserfilters in einer schematischen Perspektivdarstellung.
- Fig. 6: zeigt eine dritte, beispielhafte Ausgestaltung des Wasserfilters in einer schematischen Perspektivansicht.

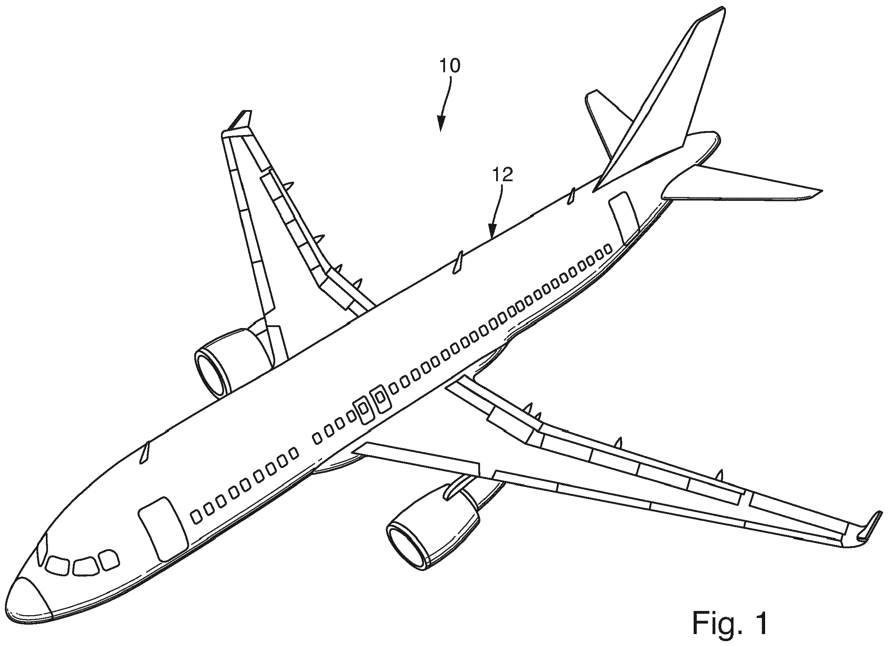

In der Figur 1 ist eine beispielhafte Ausgestaltung eines Flugzeugs 10 in einer schematischen Perspektivansicht wiedergegeben. Das Flugzeug 10 weist einen Flugzeugrumpf 12 auf. Der Flugzeugrumpf 12 weist vorzugsweise einen zumindest im Wesentlichen runden Querschnitt auf.

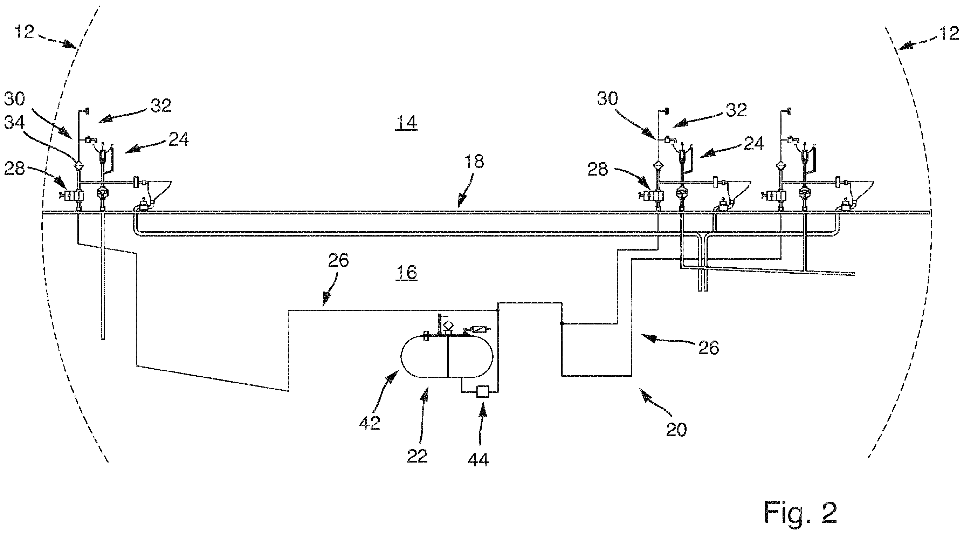

In der Figur 2 ist ein Teil einer Querschnittsansicht des Flugzeugrumpfs 12 dargestellt. Innerhalb des Flugzeugrumpfs 12 sind ein Kabinenbereich 14 und ein Unterflurbereich 16 ausgebildet. Der Unterflurbereich 16 ist von dem Kabinenbereich 14 durch eine im Flugzeugrumpf 12 angeordnete Bodentrennwand 18 getrennt. In dem Unterflurbereich 16 ist auch der sogenannte Frachtbereich angeordnet. Der Frachtbereich kann auch von dem Unterflurbereich 16 gebildet sein.

Außerdem weist das Flugzeug 10 ein im Flugzeugrumpf 12 angeordnetes Frischwasserversorgungssystem 20 auf. Das Frischwasserversorgungssystem 20 weist eine Frischwasserbereitstellungseinheit 22, mehrere Wasserentnahmeeinheiten 24 und ein sich von der Frischwasserbereitstellungseinheit 22 verzweigt zu den Wasserentnahmeeinheiten 24 erstreckendes Wasserleitungsnetz 26 auf. Die Frischwasserbereitstellungseinheit 22 ist im Unterflurbereich 16 angeordnet. Die Wasserentnahmeeinheiten 24 sind hingegen jeweils im Kabinenbereich 14 angeordnet. Das Wasserleitungsnetz 26 erstreckt sich also von der Frischwasserbereitstellungseinheit 22 durch den Unterflurbereich 16, durch die Bodentrennwand 18 in den Kabinenbereich 14 zu jeder der mehreren Wasserentnahmeeinheiten 24. Dabei ist das Wasserleitungsnetz 26 derart ausgebildet, dass Wasser von der Frischwasserbereitstellungseinheit 22 zu jeder der Wasserentnahmeeinheiten 24 strömen kann. Vorzugsweise weist die Frischwasserbereitstellungseinheit 22 dazu einen Frischwassertank 42 sowie eine Wasserpumpe 44 auf. Mittels der Pumpe 44 kann das in dem Frischwassertank 42 bevorratete Frischwasser in das Wasserleitungsnetz 26 gepumpt werden, so dass es zu den Wasserentnahmeeinheiten 24 unter Druck strömt. In der Figur 2 sind mehrere Wasserentnahmeeinheiten 24 schematisch dargestellt, zu denen das Wasser strömen kann.

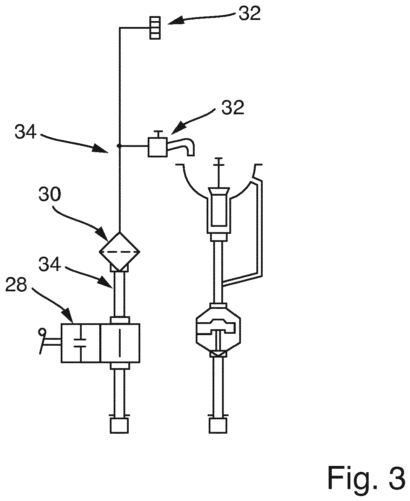

In der Figur 3 ist eine Wasserentnahmeeinheit 24 in einer weiteren Ausgestaltung schematisch und vergrößert dargestellt, wie sie für das Flugzeug 10 aus der Figur 2 Verwendung finden kann, beispielsweise anstatt zumindest einer der dort dargestellten Wasserentnahmeeinheiten 24.

Die in der Figur 3 dargestellte Wasserentnahmeeinheit 24 kann beispielsweise einem Küchenmonument aus dem Kabinenbereich 14 des Flugzeugs 10 zugeordnet sein. Grundsätzlich weist jede Wasserentnahmeeinheit 24 ein Absperrventil 28, eine Filtereinheit 30 und eine Zapfstelle 32 auf. Anstatt einer Zapfstelle 32 können auch mehrere Zapfstellen 32 vorgesehen sein. Das Absperrventil 28 der Wasserentnahmeeinheit 24, die zugehörige Filtereinheit 30 sowie die zugehörige, mindestens eine Zapfstelle 32 sind mittels Wasserleitungen 34 derart in Serie gekoppelt, so dass Wasser von dem Absperrventil 28 durch die Filtereinheit 30 zu der mindestens einen Zapfstelle 32 strömen kann.

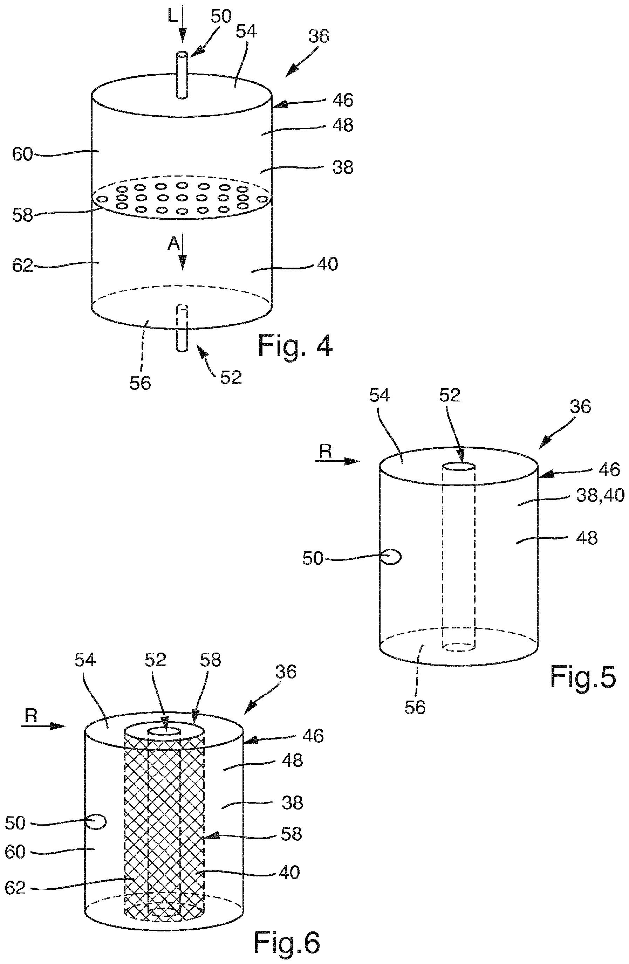

Außerdem ist es vorgesehen, dass jede Filtereinheit 30 einen austauschbaren Wasserfilter 36 aufweist. Eine beispielhafte Ausgestaltung eines Wasserfilters 36 ist in der Figur 4 in einer schematischen Perspektivansicht wiedergegeben.

Jeder Wasserfilter 36 weist ein erstes Filtermaterial 38 und ein zweites Filtermaterial 40 auf. Das erste Filtermaterial 38 eines jeden Wasserfilters 36 ist zum Filtern von Partikeln aus Wasser ausgebildet, das den jeweiligen Wasserfilter 36 durchströmt. Das zweite Filtermaterial 40 eines jeden Wasserfilters 36 ist zum Enthärten, insbesondere Härtestabilisieren, von Wasser ausgebildet, das den jeweiligen Wasserfilter 36 durchströmt. Das Filtern von Partikeln aus dem Wasser mittels des ersten Filtermaterials 38 wird auch als erste Filterfunktion bezeichnet. Das Enthärten bzw. die Härtestabilisierung des Wassers mittels des zweiten Filtermaterials 40 wird auch als zweite Filterfunktion oder Enthärtungsfunktion bezeichnet. Mittels des ersten Filtermaterials 38 können Partikel aus dem den zugehörigen Wasserfilter 36 durchströmenden Wasser herausgefiltert werden. Außerdem oder alternativ kann der Geruch und/oder der Geschmack von Wasser durch das Herausfiltern von Partikeln verbessert werden.

Das zweite Filtermaterial 40 eines jeden Wasserfilters 36 ist zum Enthärten, insbesondere zur Härtestabilisierung, von Wasser ausgebildet. Wasser, das das zweite Filtermaterial 40 durchströmt weist im Anschluss also einen geringeren Wasserhärtegrad auf. Dies kann insbesondere durch die Reduzierung des Calciumanteils und/oder Magnesiumanteils im Wasser gewährleistet werden. Wasser mit einem geringeren Härtegrad sind für ein an eine Wasserentnahmeeinheit angeschlossenes Gerät, wie ein Wassererhitzer oder eine Kaffeemaschine, von besonderem Vorteil. Denn eine durch Verkalkung verursachte Ausfallrate kann mittels des entsprechend gefilterten Wasser reduziert werden.

Jeder Wasserfilter 36 ist mittels des ersten Filtermaterials 38 und des zweiten Filtermaterials 40 dazu ausgebildet, jede der beiden Filterfunktionen sicher zu gewährleisten. Jede Wasserentnahmeeinheit 24 weist eine Filtereinheit 30 mit dem zugehörigen, austauschbaren Wasserfilter 36 auf. Das an jeder Zapfstelle 32 der jeweiligen Wasserentnahmeeinheit 24 zur Verfügung gestellte Wasser ist dabei das durch die zugehörige Filtereinheit 36 gefilterte Wasser.

Wie es aus der Figur 2 hervorgeht, ist jede Wasserentnahmeeinheit 24 in dem Kabinenbereich 14 angeordnet. So kann es beispielsweise vorgesehen sein, dass einem Küchenmonument im Kabinenbereich 14 eine der Wasserentnahmeeinheiten 24 zugeordnet ist. Die Zapfstelle 32 dieser Wasserentnahmeeinheit 24 kann sodann als Schnittstelle zu einer Wasserleitung eines wasserführenden Geräts des Küchenmonuments ausgebildet sein. So kann die Zapfstelle 32 beispielsweise einen Wasseranschluss darstellen, an dem eine Wasserleitung einer Kaffeemaschine des Küchenmonuments angeschlossen ist. Eine weitere Zapfstelle 32 der Wasserentnahmeeinheit 24 des Küchenmonuments kann beispielsweise einen Wasserhahn bilden. Wie zuvor bereits erläutert, strömt das Wasser bei der Wasserentnahmeeinheit 24 zunächst durch das Absperrventil 28 und daraufhin mittels einer Wasserleitung 34 zu dem Wasserfilter 30, bevor es mittels weiterer Wasserleitungen 34 zu den beiden Zapfstellen 32 strömen kann. Das Wasser für beide Zapfstellen 32 wird also zuvor mittels des Wasserfilters 36 der Wasserfiltereinheit 30 der zuvor genannten Wasserentnahmeeinheit 24 gefiltert.

In der Praxis hat es sich als besonders vorteilhaft erwiesen, wenn beispielsweise das Wasser für eine Kaffeemaschine oder das Wasser, das an einem Wasserhahn innerhalb des Küchenmonuments entnehmbar ist, von Partikeln mittels des ersten Filtermaterials 38 gefiltert und die Härte des zuvor gefilterten Wassers mittels des zweiten Filtermaterials 40 herabgesetzt ist. Dies hat nämlich den vorteilhaften Effekt, dass das wasserführende elektrische Gerät, insbesondere die Kaffeemaschine, einer besonders geringen Verkalkung unterliegt. Außerdem ist das verwendete Wasser besonders geruchsarm und weist zudem einen vorteilhaften Geschmack auf. Dies stärkt wiederum die Zufriedenheit der Passagiere, wenn sie mittels des gefilterten Wassers zubereiteten Kaffee und/oder andere Speisen gereicht bekommen.

Zusammenfassend ist es also wünschenswert, Wasser mit einer guten Geruchsqualität, einer hohen Geschmacksqualität und einem besonders geringen Härtegrad zur Verfügung zu stellen. Um dies kontinuierlich gewährleisten zu können, bedarf es einer regelmäßigen Auswechselung der Wasserfilter 36. Die Wasserfiltereinheit 30 einer jeden Wasserentnahmeeinheit 24 ist deshalb zum Austauschen des austauschbaren Wasserfilters 36 ausgebildet.

Es hat sich als besonders vorteilhaft erwiesen, wenn der im Unterflurbereich 16 angeordnete Teil des Frischwasserversorgungssystems bzw. der im Unterflurbereich 16 angeordnete Teil des Wasserleitungsnetzes frei von Filtern zur Wasserfilterung ist. Um eine Wartung bzw. einen Austausch der Wasserfilter 36 vorzunehmen, bedarf es deshalb keinem Zugang zu dem Unterflurbereich 16. Über die Wasserfilter 36 im Kabinenbereich 14 hinaus ist dem Frischwasserversorgungssystem 20 besonders bevorzugt kein weiterer Filter zur Wasserfilterung zugeordnet. Ein Austausch der Wasserfilter 36 ist also ausreichend, um die gewünschte Wasserqualität und/oder Wasserhärte zu gewährleisten.

Als besonders vorteilhaft hat es sich herausgestellt, wenn jeder der Wasserfilter 36 gleichartig ausgebildet ist. Die Wasserfilter 36 der verschiedenen Wasserentnahmeeinheiten 24 können also gleich bzw. gleich ausgebildet sein. Bei den Wasserfiltern 36 kann es sich um einheitliche Wasserfilter handeln. Dies erleichtert den Austausch. Denn beim Austausch muss nicht auf eine mögliche Größe, einen besonderen Aufbau und/oder andere besondere konstruktive Ausgestaltungen geachtet werden. Vielmehr reicht es beim Austausch aus, den "alten" Wasserfilter 36 durch einen "neuen" Wasserfilter 36 zu ersetzen. Dies kann nun sodann für jeden oder eine gewünschte Auswahl der Filtereinheiten 30 der Wasserentnahmeeinheiten 24 erfolgen. Indem einheitliche Wasserfilter 36 verwendet werden, kann somit die Fehlerrate beim Austausch der Wasserfilter 36 verringert werden. Darüber hinaus können einheitliche Wasserfilter 36 besonders effizient und kostengünstig hergestellt werden.

Weiterhin hat es sich in der Praxis als besonders vorteilhaft erwiesen, wenn jeder Wasserfilter 36 als eine Wasserfilterkartusche ausgebildet ist. Ein als Wasserfilterkartusche ausgebildeter Wasserfilter 36 bietet den Vorteil, dass der Wasserfilter 36 sodann besonders einfach handhabbar ist. Darüber hinaus ist die Handhabung eines derartigen Wasserfilters 36 besonders hygienisch, denn ein unmittelbarer Kontakt mit den Filtermaterialien kann vermieden werden. Dies gilt insbesondere dann, wenn die Wasserfilterkartusche nur am Gehäuse 46 gegriffen wird.

Eine vorteilhafte Ausgestaltung des Wasserfilters 36 als Wasserfilterkartusche 36 soll anhand der Figur 4 erläutert werden. In der Figur 4 ist ein Wasserfilter 36 als Wasserfilterkartusche 36 dargestellt, wobei diese ein Gehäuse 46 sowie ein von dem Gehäuse 46 gebildeten Innenraum 48 aufweist. An dem Gehäuse 46 ist ein erster Anschluss 50 angeordnet, der zum Zuführen von Wasser in den Innenraum 48 ausgebildet ist. An dem Gehäuse 46 ist außerdem ein zweiter Anschluss 52 angeordnet, der zum Abführen von Wasser aus dem Innenraum 48 ausgebildet ist. Darüber hinaus ist der Innenraum 48 mit dem ersten Filtermaterial 38 und dem zweiten Filtermaterial 40 derart gefüllt, so dass Wasser unter unmittelbarem Kontakt mit den Filtermaterialien 38, 40 vom ersten Anschluss 50 zum zweiten Anschluss 52 strömen kann. Das Gehäuse 46 ist bis auf den ersten und zweiten Anschluss 50, 52 wasserdicht ausgebildet. Beim Austauschen des Wasserfilters 36 bzw. der Wasserfilterkartusche 36 kann dieser am Gehäuse gefasst werden, so dass kein Kontakt mit den Anschlüssen 50, 52 und/oder den Filtermaterialien 38, 40 notwendig ist. Somit kann ein besonders hygienischer Austausch des Wasserfilters 36 bzw. der Wasserfilterkartusche 36 erfolgen.

Die Filtereinheit 30 einer jeden Wasserentnahmeeinheit 24 ist zum lösbaren Halten eines Wasserfilters 36 ausgebildet. Ein von der jeweiligen Filtereinheit 30 gehaltener Wasserfilter 36 kann dabei derart mit den Wasserleitungen 34 der jeweiligen Wasserentnahmeeinheit 24 lösbar gekoppelt sein, so dass Wasser von dem Absperrventil 28 der jeweiligen Wasserentnahmeeinheit 24 durch die zugehörige Filtereinheit 30 mit dem gehaltenen Wasserfilter 36 zu der mindestens einen Zapfstelle 32 strömen kann. Mit anderen Worten kann durch das Halten eines Wasserfilters 36 von einer Filtereinheit 30 außerdem eine löbare, hydraulische Kopplung des jeweiligen Wasserfilters 36 an die Wasserleitungen 34 der zugehörigen Wasserentnahmeeinheit 24 gewährleistet werden.

Das Gehäuse 46 des Wasserfilters 36 weist eine zylindrische Form oder eine zumindest im Wesentlichen zylindrische Form auf. Das Gehäuse 46 kann als ein Kunststoffgehäuse oder als ein Metallgehäuse ausgebildet sein. So kann das Gehäuse 46 beispielsweise als ein BlechGehäuse oder ein Aluminium-Gehäuse ausgebildet sein.

Darüber hinaus hat es sich als vorteilhaft erwiesen, wenn der erste Anschluss 50 des Wasserfilters 36 an einer ersten Stirnseite 54 des Gehäuses 46 angeordnet ist. Der zweite Anschluss 52 des Wasserfilters 36 kann an einer zweiten Stirnseite 56 des Gehäuses 46 angeordnet sein. Die zweite Stirnseite 56 ist vorzugsweise eine zu der ersten Stirnseite 54 abgewandte Stirnseite.

Vorzugsweise weist die Filterkartuschenhalterung der Filtereinheit 30 zu den beiden Anschlüssen 50, 52 korrespondierende Gegenanschlüsse auf, so dass jede der Gegenanschlüsse mit einem der Anschlüsse 50, 52 des Wasserfilters 36 lösbar gekoppelt wird, wenn der Wasserfilter 36 in die Filterkartuschenhalterung eingesteckt wird. Hierbei hat es sich als besonders vorteilhaft erwiesen, wenn die Anschlüsse 50, 52 des Wasserfilters 36 als mit den jeweiligen Stirnseiten 54, 56 flach ausgebildete Anschlüsse 50, 52 ausgebildet sind, wie es beispielsweise bei den Wasserfiltern 36 der Fall ist, die in den Figuren 5 und 6 schematisch dargestellt sind.

Das erste Filtermaterial 38 ist zum Filtern von Partikeln aus dem Wasser ausgebildet, das das erste Filtermaterial 38 durchströmt. Vorzugsweise ist das erste Filtermaterial 38 als Aktivkohlefiltermaterial ausgebildet. Im Wasser ungelöste Partikel können somit abgefiltert werden. Darüber hinaus können im Wasser gelöste Partikel mittels des Aktivkohlefilters durch Absorption herausgefiltert werden. Um eine besonders einfache Trennung zwischen dem ersten Filtermaterial 38 und dem zweiten Filtermaterial 40 zu erreichen, hat es sich als vorteilhaft erwiesen, wenn beispielsweise das erste Filtermaterial 38 formstabil und offenporig ausgebildet ist.

Bei dem in Figur 4 schematisch dargestellten Wasserfilter 36 ist das Gehäuse 46 halbtransparent dargestellt, so dass das erste Filtermaterial 38 schematisch erkennbar ist. Entsprechendes gilt für das zweite Filtermaterial 40. Beide sind voneinander getrennt. Bei der in der Figur 4 exemplarisch dargestellten Ausgestaltung des Wasserfilters 36 ist das zweite Filtermaterial 40 in Strömungsrichtung (A) des Wassers hinter dem ersten Filtermaterial 38 angeordnet. Wird nun Wasser durch den ersten Anschluss 50 in den Innenraum 48 des Gehäuses 46 geführt, so strömt das Wasser zunächst durch das erste Filtermaterial 38. Hier werden Partikel aus dem durchströmenden Wasser entfernt. Daraufhin strömt das Wasser durch das zweite Filtermaterial 40, um die Härteablagerungen durch das Wasser zu verringern. Schließlich strömt das Wasser durch den zweiten Anschluss 52 heraus. Dieser Anschluss 52 ist über einen Gegenanschluss, einer Wasserleitung und ggf. weitere wasserführende Elemente mit der mindestens einer Zapfstelle 32 gekoppelt.

Das zweite Filtermaterial 40 kann ein Katalysatormaterial aufweisen oder als ein Katalysatormaterial ausgebildet sein, so dass die Härtestabilisierung des das zweite Filtermaterial 40 durchströmenden Wassers mittels Katalyse erfolgt. Alternativ und/oder ergänzend kann das zweite Filtermaterial 40 derart ausgebildet sein, dass es Calcium- und/oder Carbonat-Ionen aus dem Wasser mittels Katalysator-Technologie zu Kalkkristallen zusammenfügt. Hierdurch werden Härteablagerungen verringert.

Eine weitere Ausgestaltung des zweiten Filtermaterials 40 zeichnet sich dadurch aus, dass das zweite Filtermaterial 40 Kationenaustauscherharzmaterial aufweist oder von diesem gebildet ist, wobei das Kationenaustauscherharzmaterial zum Enthärten von Wasser ausgebildet ist. So kann das Kationenaustauscherharzmaterial zum Austausch von Calcium-Kationen, die im Wasser gelöst sind, gegen Natrium-Kationen des Kationenaustauschmaterials ausgebildet sein. Hierdurch wird die Wasserhärte verringert.

Das zweite Filtermaterial 40 kann ebenfalls formstabil und offenporig ausgebildet sein. Sofern beide Filtermaterialien 38, 40 formstabil und offenporig ausgebildet sind, können diese, wie in Figur 4 schematisch dargestellt, in Strömungsrichtung (A) hintereinander angeordnet sein. Es kann jedoch auch vorgesehen sein, dass das erste Filtermaterial 38 und/oder das zweite Filtermaterial 40 jeweils granulatartig ausgebildet sind. Das erste Filtermaterial 38 und das zweite Filtermaterial 40 können sodann zusammengemischt in den Innenraum 48 des Wasserfilters 36 gegeben sein, wie es beispielsweise bei der Ausgestaltung aus der Figur 5 schematisch gezeigt ist. Eine eindeutige örtliche Trennung zwischen dem ersten Filtermaterial 38 und dem zweiten Filtermaterial 40 liegt hier nicht vor.

Wird eine Trennung hingegen gewünscht, so kann in das Gehäuse 46 eine siebartige Trennwand 58 integriert sein. Es hat sich als vorteilhaft herausgestellt, wenn der Innenraum 48 des Gehäuses 46 von der siebartigen Trennwand 58 in eine erste Filterkammer 60 und eine zweite Filterkammer 62 unterteilt ist. Sodann ist es möglich, dass das erste Filtermaterial 38 ausschließlich in der ersten Filterkammer 60 und das zweite Filtermaterial 40 ausschließlich in der zweiten Filterkammer 62 angeordnet sind. Durch die siebartige Trennwand 58 können das erste Filtermaterial 38 und/oder das zweite Filtermaterial 40 auch als granulatartiges Filtermaterial vorliegen, ohne dass es zu einer Vermischung zwischen den beiden Filtermaterialien 38, 40 kommt. Dies gewährleistet wiederum, dass das Wasser zunächst durch das erste Filtermaterial 38 gefiltert und dabei von Partikeln befreit wird, bevor es zu und durch das zweite Filtermaterial 40 strömt, um eine Reduzierung der Wasserhärte zu erreichen.

Bei dem in Figur 4 dargestellten Wasserfilter 36 durchströmt das Wasser den Wasserfilter 36 in Längsachsialrichtung L. Es ist jedoch auch möglich, dass das Wasser den Wasserfilter 36 in Radialrichtung R durchströmt, wie es beispielsweise bei dem Wasserfilter 36 aus den Figuren 5 und 6 der Fall ist.

Bei den Wasserfiltern 36 aus den Figuren 5 und 6 ist es bevorzugt vorgesehen, dass das Gehäuse 46 des Wasserfilters 36 eine hohlzylindrische Form aufweist. Der erste Anschluss 50 kann an einer außenseitigen Mantelwandung des Gehäuses 46 angeordnet sein. Der zweite Anschluss 52 kann an einer mantelseitengen Innenwandung oder an einer der Stirnflächen des hohlen Innenraums ausgebildet sein. In der zuvor genannten zweiten Variante ist es bevorzugt vorgesehen, dass die mannteilseitige Innenwandung des hohlzylindrischen Gehäuses 46 wasserdurchlässig, insbesondere siebartig, ausgebildet ist.

Bei der in Figur 6 beispielhaft dargestellten Ausgestaltung des Wasserfilters 36 ist es außerdem vorgesehen, dass eine ringförmige und siebartige Trennwand als die Trennwand 58 derart im Innenraum 48 des Gehäuses 46 angeordnet ist, so dass die erste Filterkammer 60 radial außenseitig und getrennt mittels der Trennwand 58 zu der zweiten Filterkammer 62 angeordnet ist. Dabei ist es ebenfalls bevorzug vorgesehen, dass das erste Filtermaterial 38 ausschließlich in der ersten Filterkammer 60 und das zweite Filtermaterial 40 ausschließlich in der zweiten Filterkammer 62 angeordnet ist. Der erste, an der außenseitigen Mantelwandung angeordnete Anschluss 50 dient dazu, um Wasser in den Innenraum 48 bzw. in die erste Filterkammer 60 einströmen zu lassen, so dass dieses Wasser mittels des ersten Filtermaterials 38 von Partikeln befreit oder zumindest um Partikel reduziert wird. Anschließend durchströmt das Wasser die ringförmige, siebartige Trennwand 58, um in die zweite Filterkammer 62 einzuströmen, in der das zweite Filtermaterial 40 ist, so dass hier eine Enthärtung des durchströmenden Wassers erfolgt.

Ergänzend sei darauf hingewiesen, dass "aufweisend" keine anderen Elemente ausschließt und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Flugzeug (10), aufweisend:
einen Flugzeugrumpf (12),
einen im Flugzeugrumpf (12) ausgebildeten Kabinenbereich (14),
einen im Flugzeugrumpf (12) ausgebildeten Unterflurbereich (16), der von dem Kabinenbereich (14) durch eine im Flugzeugrumpf (12) angeordnete Bodentrennwand (18) getrennt ist, und
ein Frischwasserversorgungssystem (20),
wobei das Frischwasserversorgungssystem (20) eine Frischwasserbereitstellungseinheit (22) aufweist, die im Unterflurbereich (16) angeordnet ist,
wobei das Frischwasserversorgungssystem (20) mehrere Wasserentnahmeeinheiten (24) aufweist, die jeweils im Kabinenbereich (14) angeordnet sind,
wobei das Frischwasserversorgungssystem (20) ein sich von der Frischwasserbereitstellungseinheit (22) verzweigt zu den Wasserentnahmeeinheiten (24) erstreckendes Wasserleitungsnetz (26) aufweist, so dass Wasser von der Frischwasserbereitstellungseinheit (22) zu jeder der Wasserentnahmeeinheiten (24) strömen kann,
wobei jede Wasserentnahmeeinheit (24) ein Absperrventil (28), eine Filtereinheit (30) und eine Zapfstelle (32) aufweist, die mittels Wasserleitungen (34) in Serie gekoppelt sind, so dass Wasser von dem Absperrventil durch die Filtereinheit (30) zu der Zapfstelle (32) strömen kann,
wobei jede Filtereinheit (30) einen austauschbaren Wasserfilter (36) mit einem ersten Filtermaterial (38) und einem zweiten Filtermaterial (40) aufweist,
wobei das erste Filtermaterial (38) zum Filtern von Partikeln aus dem wasserfilterdurchströmenden Wasser ausgebildet ist, und
wobei das zweite Filtermaterial (40) zum Enthärten des wasserfilterdurchströmenden Wassers ausgebildet ist.

2. Flugzeug (10) nach einem der vorhergehenden Ansprüche, **dadurch gekennzeichnet, dass** das erster Filtermaterial (38) Aktivkohlefiltermaterial ist.

3. Flugzeug (10) nach einem der vorhergehenden Ansprüche, **dadurch gekennzeichnet, dass** das zweite Filtermaterial (40) als ein Katalysatormaterial ausgebildet ist.

4. Flugzeug (10) nach einem der vorhergehenden Ansprüche, **dadurch gekennzeichnet, dass** das erste Filtermaterial (38) und/oder das zweite Filtermaterial (40) granulatartig ausgebildet ist.

5. Flugzeug (10) nach einem der vorhergehenden Ansprüche, **dadurch gekennzeichnet, dass** das erste Filtermaterial (38) und/oder das zweite Filtermaterial (40) formstabil und/oder offenporig ausgebildet ist.

6. Flugzeug (10) nach einem der vorhergehenden Ansprüche, **dadurch gekennzeichnet, dass** ein im Unterflurbereich (16) angeordneter Teil des Wasserleitungsnetzes (26) frei von Filtern zur Wasserfilterung ist.

7. Flugzeug (10) nach einem der vorhergehenden Ansprüche, **dadurch gekennzeichnet, dass** der Wasserfilter (36) einer jeden Filtereinheit (30) als austauschbare Wasserfilterkartusche ausgebildet ist, die lösbar von einer Filterkartuschenhalterung der jeweiligen Filtereinheit (30) gehalten ist.

8. Flugzeug (10) nach dem vorhergehenden Anspruch, **dadurch gekennzeichnet, dass** jede Wasserfilterkartusche als eine in die jeweilige Filterkartuschenhalterung einsteckbare bzw. aussteckbare Wasserfilterkartusche ausgebildet ist, und wobei jede der Filterkartuschenhalterungen zum Einstecken bzw. Ausstecken einer Wasserfilterkartusche ausgebildet ist.

9. Flugzeug (10) nach einem der vorhergehenden Ansprüche, **dadurch gekennzeichnet, dass** die mehreren Wasserfilter (36) gleich ausgebildet sind.

10. Flugzeug (10) nach einem der vorhergehenden Ansprüche, **dadurch gekennzeichnet, dass** jede Wasserentnahmeeinheit (24) jeweils einem Küchenmonument im Kabinenbereich (14) oder jeweils einem Toilettenmonument im Kabinenbereich (14) zugeordnet ist.

11. Flugzeug (10) nach einem der vorhergehenden Ansprüche, **dadurch gekennzeichnet, dass** jeder Wasserfilter (36) aufweist: ein Gehäuse (46), ein von dem Gehäuse (46) gebildeter Innenraum (48), einen ersten Anschluss (50) zum Zuführen von Wasser in den Innenraum (48), und einen zweiten Anschluss (52) zum Abführen von Wasser aus dem Innenraum (48), wobei der Innenraum (48) derart mit dem ersten und zweiten Filtermaterial (38, 40) gefüllt ist, so dass Wasser unter unmittelbarem Kontakt mit den Filtermaterialien (38, 40) vom ersten Anschluss (50) zum zweiten Anschluss (52) strömen kann.

12. Flugzeug (10) nach dem vorhergehenden Anspruch, **dadurch gekennzeichnet, dass** der Innenraum (48) des Gehäuses (46) von einer siebartigen Trennwand (58) in eine erste Filterkammer (60) und eine zweite Filterkammer (62) unterteilt ist, wobei das erste Filtermaterial (38) ausschließlich in der ersten Filterkammer (60) und das zweite Filtermaterial ausschließlich in der zweiten Filterkammer (62) angeordnet sind.

13. Flugzeug (10) nach dem vorhergehenden Anspruch, **dadurch gekennzeichnet, dass** die Trennwand (58) jedes Wasserfilters (36) derart ausgebildet und/oder angeordnet ist, dass die zweite Filterkammer (62) hinter der ersten Filterkammer (60) in einer Strömungsrichtung für Wasser von dem ersten Anschluss (50) zum zweiten Anschluss (52) angeordnet ist.

14. Flugzeug (10) nach einem der vorhergehenden Ansprüche 12 bis 13, **dadurch gekennzeichnet, dass** das Gehäuse (46) jedes Wasserfilters (36) eine zylindrische Form aufweist, wobei der erste Anschluss (50) des jeweiligen Wasserfilters (36) an einer ersten Stirnseite (54) des Gehäuses (46) angeordnet ist, der zweite Anschluss (52) des jeweiligen Wasserfilters (36) an einer zweiten Stirnseite (56) des Gehäuses (46) angeordnet ist, und die Trennwand (58) des jeweiligen Wasserfilters (36) derart zwischen den Stirnseiten (54, 56) des Gehäuses (46) angeordnet ist, dass die Filterkammern (60, 62) des jeweiligen Wasserfilters (36) in einer Längsachsialrichtung des Gehäuses (46) hintereinander von der Trennwand (58) getrennt angeordnet sind.

15. Flugzeug (10) nach einem der vorhergehenden Ansprüche 12 bis 13, **dadurch gekennzeichnet, dass** das Gehäuse (46) jedes Wasserfilters (36) eine hohlzylindrische Form aufweist und die Trennwand (58) des jeweiligen Wasserfilters (36) als ringförmige Trennwand (58) derart im Innenraum (48) des Gehäuses (46) angeordnet ist, dass die erste Filterkammer (60) des jeweiligen Wasserfilters (36) radial außenseitig und getrennt mittels der Trennwand (58) zu der zweiten Filterkammer (62) des jeweiligen Wasserfilters (36) angeordnet ist.
